# EUROPÄISCHE PATENTSCHRIFT

(11) **EP 0 556 458 B1**
(45) Veröffentlichungstag und Bekanntmachung des Hinweises auf die Patenterteilung: **28.02.1996**
(21) Anmeldenummer: 92120014.3
(22) Anmeldetag: 25.11.1992
(51) Int. Cl.: A01B 3/46

(54) **Aufsattel- oder Anhänge-Drehpflug**
Hitchable or trailable reversible plough
Charrue réversible attelable ou accrochable

(30) Priorität: 21.02.1992 DE 9202298 U
(43) Veröffentlichungstag der Anmeldung: 25.08.1993
(73) Patentinhaber: Rabewerk GmbH + Co., D-49152 Bad Essen (DE)
(72) Erfinder: Becker, Ignaz, Dipl.-Ing., W-4994 Pr. Oldendorf (DE); Buhl, Manfred, Dipl.-Ing., W-4500 Osnabrück (DE); Reker, Stefan, Dipl.-Ing., W-4508 Bohmte (DE)
(74) Vertreter: Missling, Arne, Dipl.-Ing.

(56) Entgegenhaltungen:
- EP-B- 0 297 969
- DE-A- 1 963 277
- DE-B- 2 930 742

## Beschreibung

Die Erfindung bezieht sich auf einen Aufsattel- oder Anhänge-Drehpflug mit einem vorderen und einem hinteren, durch ein horizontales Gelenk verbundenen Pflugrahmen, wobei vorderer und hinterer Pflugrahmen jeweils mehrere hintereinander angeordnete Pflugkörper tragen, mit einer mindestens ein Rad umfassenden Abstützvorrichtung, welche in der hinteren Hälfte des Drehpfluges angeordnet ist, und einer Tiefen-Führungseinrichtung für den hinteren Pflugrahmen.

Im speziellen betrifft die Erfindung lange Aufsattel- bzw. Anhänge-Drehpflüge, welche einen Karren oder ein Hinterrad aufweisen, welches von einem Stabilisator gehalten und in der hinteren Hälfte der Pfluglänge angeordnet ist. Um eine Bodenanpassung eines langen Pfluges zu ermöglichen und um Änderungen der Arbeitstiefe des letzten Pflugkörpers zu vermeiden, ist es, beispielsweise aus der EP-B1-297 969 bekannt, im Bereich der Abstützung des Pfluges durch das Hinterrad ein Gelenk einzufügen und am hinteren Pflugende ein Tiefen-Führungsrad anzubringen. Der vordere Pflugteil wird somit an seinem vorderen Ende vom Schlepper und an seinem hinteren Ende von dem Hinterrad geführt, während der hintere Pflugteil an seinem vorderen Ende von dem Hinterrad und an seinem hinteren Ende von dem Tiefen-Führungsrad oder auch von Schleifsohlen der Pflugkörper abgestützt ist. Es ist somit möglich, die letzte Furche, welche gleichzeitig die Führung für die Schlepperräder während des nächsten Bearbeitungsganges bildet, mit einer konstanteren Tiefe auszubilden. Ähnliche Lösungen sind aus DE-OS 22 48 186 aus dem deutschen Gebrauchsmuster 72 02 127 und der FR-A-2 201 022 bekannt. Diese Lösungen betreffen Beetpflüge.

Das Problem besteht hinsichtlich der Anordnung und Ausgestaltung des Gelenkes insbesondere darin, daß bei den Beetpflügen das Gelenk eine gewisse Höhe aufweisen muß, um zu verhindern, daß unter dem Gelenk Verstopfungen durch Strohknäule oder ähnliches vorkommen. Wenn jedoch das Gelenk zu hoch ist, ergibt sich für die an den Pflugkörpern angreifenden Kräfte bzw. deren Resultierende ein großer Hebelarm, welcher zum Anheben des hinteren Bereiches des Pfluges führt. Man hat deshalb versucht, durch Federn ein Gegenmoment aufzubringen, siehe DE-OS 22 48 186 und DE-Gbm 72 02 127. Bei der Lösung gemäß der EP-B1-297 969 sowie bei dem aus der EP-A1-318 391 bekannten Pflug ergibt sich jedoch in der normalen Lage des vorderen und hinteren Pflugrahmens kein ausreichendes Moment, so daß bei schweren Böden der hintere Pflugrahmen angehoben werden wird. Aus der EP-B1-297 969 ist es bekannt, das Gelenk zu verriegeln, wenn der Pflug im Vorgewende fährt. Während des Pflügens ist eine derartige Verriegelung jedoch nicht möglich, da dann die Wirkung des Gelenkes aufgehoben würde. Bei dem aus der EP-A1-318 391 bekannten Pflug können die federnden Elemente nur dann wirksam werden, wenn der hintere Pflugrahmen bereits aus der fluchtenden, das heißt der normalen Lage heraus bewegt ist. Dies bedeutet, daß in der normalen Mittellage, in welcher eine Vorspannung aufgebracht werden müßte, Kraftfreiheit herrscht.

Der Erfindung liegt die Aufgabe zugrunde, einen Drehpflug der eingangs genannten Art zu schaffen, welcher bei einfachem Aufbau und einfacher, betriebssicherer Anwendbarkeit auch bei unebenem Boden eine konstante Tiefen-Führung des hinteren Pflugrahmens gewährleistet.

Erfindungsgemäß wird die Aufgabe dadurch gelöst, daß das Gelenk als Doppelgelenk ausgebildet ist, wobei ein unteres Gelenk unterhalb der Symmetrieebene des Pflugrahmens und ein oberes Gelenk oberhalb der Symmetrieebene des Pflugrahmens angeordnet sind.

Der erfindungsgemäße Drehpflug zeichnet sich durch eine Reihe erheblicher Vorteile aus. Erfindungsgemäß erfolgt die Belastung des hinteren Pflugrahmens dadurch, daß das jeweils wirksame Gelenk des Doppelgelenks unter der Symmetrieebene des Rahmens angeordnet ist. Hierdurch kann sich der Pflug während der Arbeit Bodenunebenheiten anpassen, ohne daß zusätzliche Mittel zur Vorspannung oder ähnliches erforderlich wären. Da sich beim Drehen des Pfluges die beiden Gelenke hinsichtlich ihrer Wirksamkeit abwechseln, ist in beiden Pflugstellungen sichergestellt, daß jeweils das untere Gelenk als Arbeitsgelenk wirkt, während das obere Gelenk ein ausreichendes Spiel aufweist, um eine Bewegung des hinteren Pflugrahmens zu ermöglichen.

Besonders günstig ist der erfindungsgemäße Drehpflug, wenn hinter dem Teilungsgelenk des Pflugrahmens mindestens drei Pflugkörperpaare angeordnet sind. Das Gelenk wird erfindungsgemäß bevorzugterweise möglichst weit nach vorne, bezogen auf die Fahrtrichtung versetzt.

Weitere vorteilhafte Ausgestaltungen der Erfindung ergeben sich aus den Unteransprüchen.

Im folgenden werden Ausführungsbeispiele der Erfindung in Verbindung mit der Zeichnung beschrieben. Dabei zeigt:
- Fig. 1: eine vereinfachte Draufsicht auf ein Ausführungsbeispiel des erfindungsgemäßen Drehpfluges,
- Fig. 2: eine vereinfachte Teil-Seitenansicht des hinteren Pflugrahmens zur Erläuterung der Kraft-Resultierenden,
- Fig. 3: eine vereinfachte Teilansicht des Gelenkbereiches gemäß einem ersten Ausführungsbeispiel der Erfindung,
- Fig. 4a und 4b: Teilansichten eines weiteren Ausführungsbeispieles der Erfindung, ähnlich dem Ausführungsbeispiel gemäß Fig. 3, und
- Fig. 5: eine Seitenansicht eines weiteren Ausführungsbeispieles des erfindungsgemäßen Gelenkes.

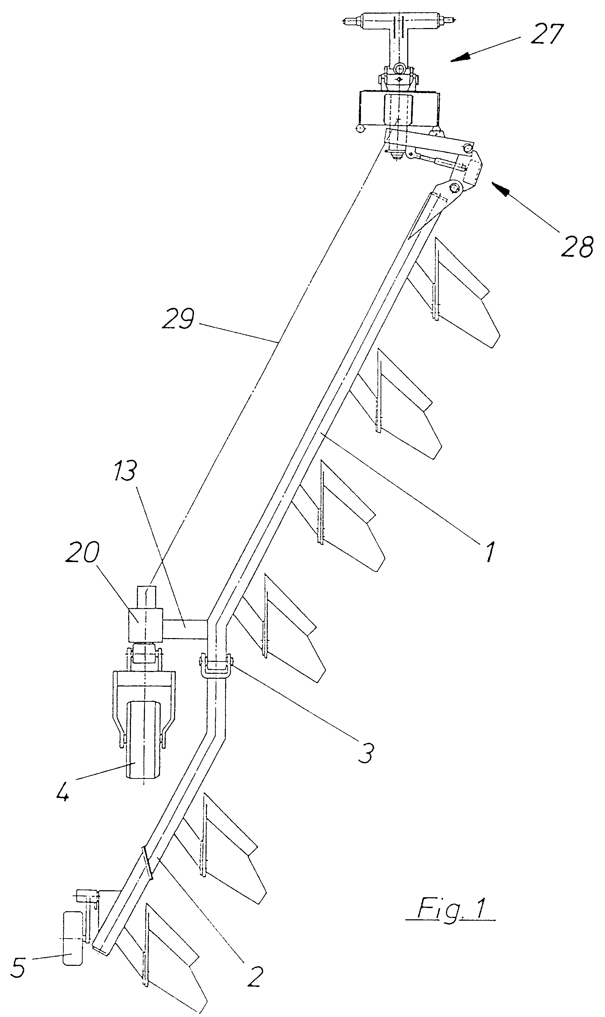

Die Fig. 1 zeigt in der Draufsicht in vereinfachter Weise die Ausgestaltung eines erfindungsgemäß weiterzubildenden Drehpfluges. Dieser umfaßt ein Vordergestell 27 sowie eine Schnittbreiteneinstellung 28, an welchen ein vorderer Pflugrahmen 1 sowie Stabilisator 29 gelagert sind. Die Abstützung des vorderen Pflugrahmens erfolgt über ein Hinterrad 4. Insofern entspricht der Aufbau dieses Drehpfluges den bisher bekannten Ausgestaltungsformen, so daß auf weitere Erläuterungen verzichtet und auf den diesbezüglichen Stand der Technik verwiesen werden kann.

Am hinteren Ende des vorderen Pflugrahmens 1 ist an einem horizontalen Gelenk 3 ein hinterer Pflugrahmen 2 gelagert, dessen freies Ende mit einem Tiefen-Führungsrad 5 versehen ist.

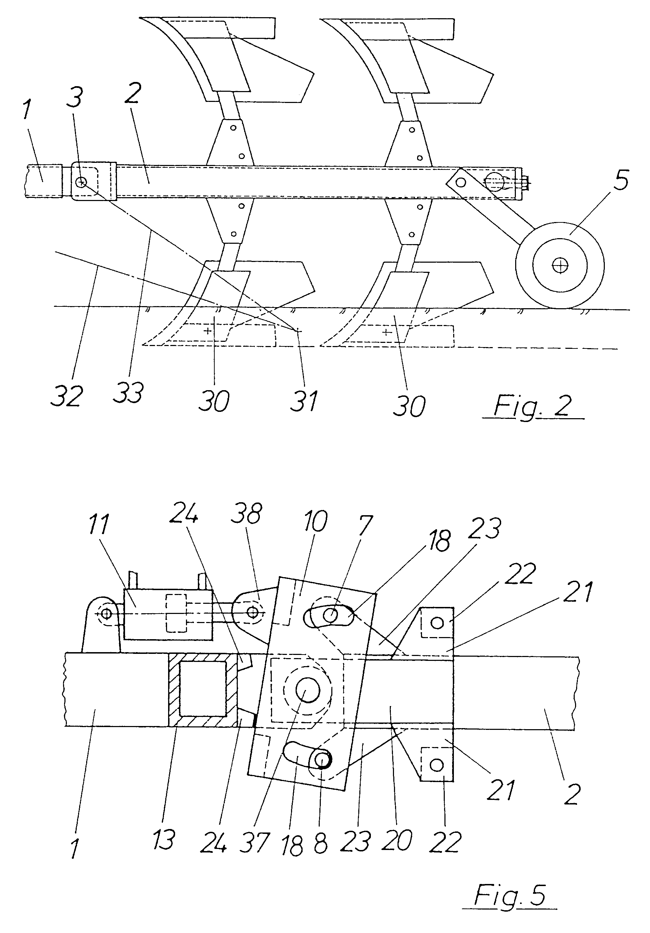

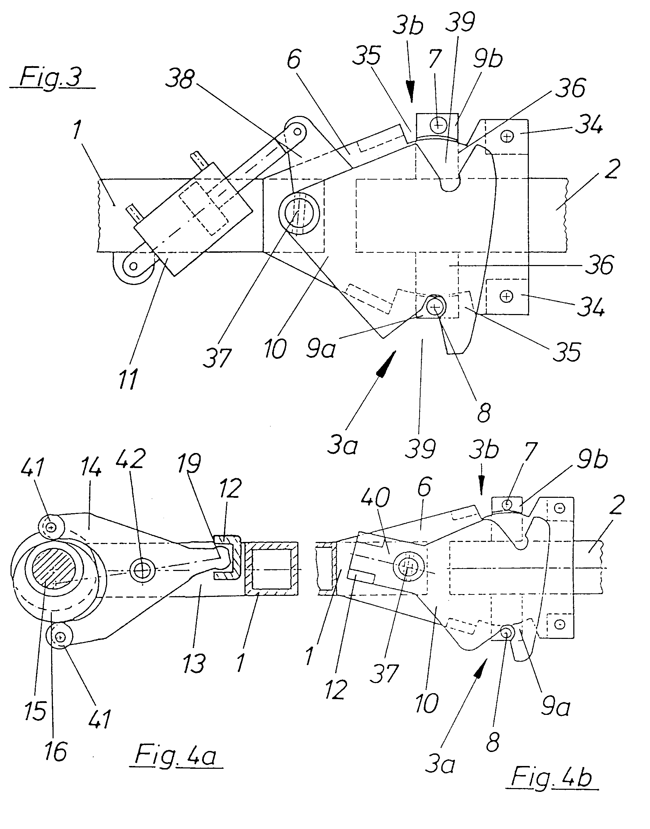

Die Fig. 2 zeigt den hinteren Pflugrahmen 2 in Seitenansicht. Dabei ist insbesondere die Lage des horizontalen Gelenkes 3 erläutert. Die Kräfte der Pflugkörper 30 führen zu einem Eingriff der Kraft-Resultierenden an dem Punkt 31, wobei die Resultierende der Bodenkräfte die mit 32 gezeigte Orientierung haben kann. Es ist ersichtlich, daß sich, wie beim Stand der Technik, ein erheblicher Hebelarm ergibt. Nur wenn die Resultierende die mit 33 eingezeichnete Richtung aufweisen würde, wäre sichergestellt, daß der hintere Teil des Pfluges in ausreichender Weise im Boden gehalten werden kann.

Aus der Darstellung der Fig. 2 ergibt sich, daß erfindungsgemäß mehrere Lösungswege zur Verfügung stehen. Zum einen ist es möglich, das erforderliche Moment mit Hilfe einer äußeren Kraft, zum Beispiel mittels eines Hydraulikzylinders in Kombination mit elastischen Federelementen aufzubringen. Eine anderen Möglichkeit besteht darin, das Moment mit Hilfe des Gewichtes des Pfluges aufzubringen, eine dritte Möglichkeit ergibt sich durch die Aufbringung des Momentes mit Hilfe der Drehung des Pfluges. Die Fig. 2 zeigt jedoch auch, daß das Gelenk 3 für den praktischen Einsatz zu hoch liegt. Das Gelenk muß also für jede Arbeitsstellung tiefer gelegt werden, d. h. es werden zwei alternierende Gelenkstellen erforderlich.

Aus der Fig. 1 ist zu erkennen, daß das Gelenk 3 bevorzugterweise dann in einem günstigen Bereich angeordnet ist, wenn es sich in einem Bereich zwischen der Achse des Hinterrades 4 und dem letzten Pflugkörper des Vorderpfluges befindet. Der erste Pflugkörper des Hinterpfluges folgt dann besonders gut der Schleppkurve des hinteren Körpers des Vorderpfluges.

In Fig. 3 ist in der Seitenansicht ein erstes Ausführungsbeispiel des erfindungsgemäßen Gelenkbereiches dargestellt. Es ist das hintere Ende des vorderen Pflugrahmens 1 sowie das vordere Ende des hinteren Pflugrahmens 2 ersichtlich. An dem hinteren Ende des vorderen Pflugrahmens 1 ist eine aus zwei zueinander parallelen Führungsplatten 6 gebildete Tasche befestigt. Um den Abstand der beiden Führungsplatten 6 beizubehalten, sind Distanzblöcke 34 vorgesehen. Am oberen und unteren Bereich weist die Führungsplatte 6 jeweils eine Ausnehmung 35 auf, deren dem Zentrum der Führungsplatte 6 zugewandte Kante bogenförmig ausgebildet ist.

An dem vorderen Ende des hinteren Pflugrahmens 2 sind zwei vertikale Streben 36 angebracht, an deren freien Enden jeweils ein Führungsstück 9 (unteres Führungsstück 9a und oberes Führungsstück 9b) befestigt sind. Die Führungsstücke weisen seitlich vorstehend einen oberen Gelenkzapfen 7 und einen unteren Gelenkzapfen 8 auf. Die Ausnehmungen 35 sind so bemessen, daß das Ende des hinteren Pflugrahmens 2 in der durch die Führungsplatten 6 gebildeten Tasche bewegbar ist.

An dem hinteren Ende des vorderen Pflugrahmens 1 ist an einem Lager 37 ein plattenförmiges Sperrelement 10 gelagert. Es ist auch möglich, zwei miteinander verbundene Sperrelemente vorzusehen. Das Sperrelement 10 ist mit einem Ansatz 38 versehen, welcher mit der Kolbenstange eines Hydraulikzylinders 11 verbunden ist. Somit ist es möglich, das Sperrelement 10 in dem zwischen dem oberen und dem unteren Gelenkzapfen 7, 8 gebildeten Zwischenraum hin und her zu schwenken.

An dem seitlichen Bereich weist das Sperrelement 10 oben und unten jeweils eine Ausnehmung 39 auf, welche sich zu ihrem Grund hin verjüngt und so ausgestaltet ist, daß in der Endstellung des Sperrelementes 10 der obere oder der untere Gelenkzapfen 7 oder 8 gegriffen werden kann. Bei der gezeigten Stellung ist das Sperrelement 10 in der Arbeitsstellung, so daß sich der untere Gelenkzapfen 8 in der unteren Ausnehmung 39 befindet. Es wird somit durch den Gelenkzapfen 8 ein unteres horizontales Gelenk 3a gebildet, während ein oberes horizontales Gelenk 3b außer Funktion gesetzt ist. Somit ist eine Verschwenkung des hinteren Pflugrahmens 2 relativ zu dem vorderen Pflugrahmen 1 möglich. Beim Drehen des Pfluges erfolgt eine Umstellung des Hydraulikzylinders 11, so daß das andere horizontale Gelenk (3b), welches dann das untere Gelenk bildet, in Funktion gesetzt werden kann.

Der Zylinder 11 kann parallel zu einem doppelt wirkenden Drehzylinder des Pfluges angeschlossen sein. Wird der Drehzylinder des Pfluges zur nächsten Drehung umgekehrt zur vorherigen Drehung beaufschlagt, so erfolgt auch eine entsprechende Beaufschlagung des Hydraulikzylinders 11 zur Verschwenkung des Sperrelementes 10. Zusätzliche Steuermittel sind somit nicht erforderlich.

Die Fig. 4a und 4b zeigen eine Weiterbildung des in Fig. 3 gezeigten Ausführungsbeispieles. Die Fig. 4b zeigt eine Seitenansicht, während die Fig. 4a, teils im Schnitt, eine rückseitige Ansicht darstellt. Der Aufbau des Ausführungsbeispieles gemäß Fig. 4b unterscheidet sich von dem Ausführungsbeispiel gemäß Fig. 3 darin, daß anstelle des Ansatzes 38 nunmehr ein über das Lager 37 verlängerter Bereich 40 des Sperrelementes 10 vorgesehen ist, welcher eine, wie aus Fig. 4a ersichtlich, u-förmige Klaue aufweist.

Die Fig. 4a zeigt einen sich quer zum vorderen Pflugrahmen 1 erstreckenden Träger 13, welcher zur Lagerung des Hinterrades 4 dient. Im einzelnen wird das Hinterrad unter anderem mittels einer Stabilisatorachse 15 gelagert. Auf diese ist ein Exzenter 16 aufgesetzt, welcher von einem gabelförmigen Ende eines Schaltelementes 14 umgriffen wird. Zur Verminderung der Reibung weisen die gabelförmigen Enden des Schaltelementes 14 jeweils eine Rolle 41 auf. Das Schaltelement 14 ist an einem Lager 42 an dem Träger 13 gelagert. An seinem dem Pflugrahmen 1 zugewandten Ende umfaßt das Schaltelement 14 einen Kugelansatz 19, welcher in der Klaue 12 geführt ist. Bei einer Drehung des Pfluges erfolgt somit eine Verschwenkung des Schaltelementes 14, welche wiederum eine Umstellung des Sperrelementes 10 zur Folge hat.

Die Fig. 5 zeigt ein weiteres Ausführungsbeispiel der Erfindung. Zur Verdeutlichung ist der Träger 13 dargestellt, um zu zeigen, an welcher Lage des Pfluges sich das Gelenk 3 befindet. Dieses ist somit möglichst weit nach vorne versetzt (siehe auch Fig. 1). Gemäß dem Ausführungsbeispiel der Fig. 5 sind an dem hinteren Ende des vorderen Pflugrahmens 1 seitliche Platten 20 angeschweißt, zwischen denen der vordere Endbereich des hinteren Pflugrahmens 2 geführt ist. Die Platten 20 weisen an ihrem Ende jeweils vertikale Streben 21 auf, welche mittels Distanzstücken 22 beabstandet sind. An dem vorderen Ende des hinteren Pflugrahmens 2 ist oben und unten jeweils eine Strebe 23 angesetzt, welche einen oberen Gelenkzapfen 7 und einen unteren Gelenkzapfen 8 trägt. Die Gelenkzapfen 7 und 8 stehen seitlich vor und sind in Langlöchern 18 eines plattenförmigen Sperrelementes 10 geführt. Wie bei dem in Fig. 3 gezeigten Ausführungsbeispiel sind bevorzugt zwei miteinander verbundene Sperrelemente 10 vorgesehen. Das Sperrelement 10 ist an einem Lager 37 schwenkbar gelagert und weist einen Ansatz 38 auf, welcher mit der Kolbenstange eines Hydraulikzylinders 11 verbunden ist. Insofern ähnelt sich der Aufbau dem Ausführungsbeispiel gemäß Fig. 3. Um den Schwenkwinkel des Sperrelementes 10 zu begrenzen, sind an dem vorderen Pflugrahmen 1 Anschläge 24 angebracht. Die Sperrelemente bzw. die Langlöcher 18 werden für die einzelnen Arbeitsstellungen derart verschwenkt, daß der untere Zapfen 8 am hinteren Ende des Langlöches 18 anliegt. Der obere Zapfen 7 kann dann frei schwenken.

## Patentansprüche

1. Aufsattel- oder Anhänge-Drehpflug mit einem vorderen (1) und einem hinteren (2), durch ein horizontales Gelenk (3) verbundenen Pflugrahmen, wobei vorderer und hinterer Pflugrahmen jeweils mehrere hintereinander angeordnete Pflugkörper tragen, mit einer mindestens ein Rad (4) umfassenden Abstützvorrichtung, welche in der hinteren Hälfte des Drehpfluges angeordnet ist, und einer Tiefen-Führungseinrichtung für den hinteren Pflugrahmen (2), dadurch gekennzeichnet, daß das Gelenk (3) als Doppelgelenk ausgebildet ist, wobei ein unteres Gelenk (3a) unterhalb der Symmetrieebene des Pflugrahmens (1, 2) und ein oberes Gelenk (3b) oberhalb der Symmetrieebene des Pflugrahmens (1, 2) angeordnet sind.

2. Drehpflug nach Anspruch 1, dadurch gekennzeichnet, daß in der Arbeitsstellung des Drehpfluges nur das untere Gelenk (3a) wirksam ist.

3. Drehpflug nach Anspruch 1 oder 2, dadurch gekennzeichnet, daß das Gelenk (3) in einem Bereich zwischen der Achse des Hinterrades (4) und dem letzten Pflugkörper des Vorderpfluges angeordnet ist.

4. Drehpflug nach einem der Ansprüche 1 bis 3, dadurch gekennzeichnet, daß das Gelenk (3) ein vertikales, am vorderen Pflugrahmen (1) befestigtes Paar von Führungsplatten (6) aufweist, zwischen welchen das vordere Ende des hinteren Pflugrahmens (2) schwenkbar aufgenommen ist, daß das vordere Ende des hinteren Pflugrahmens (2) ein oberes (9b) und ein unteres (9a), jeweils mit einem Gelenkzapfen (7, 8) versehenes Führungsstück aufweisen, welche jeweils Teil des oberen (3b) und des unteren (3a) Gelenkes sind und daß schwenkbar an dem hinteren Endbereich des vorderen Pflugrahmens (1) ein Sperrelement (10) gelagert ist, welches wahlweise in eine den oberen (7) und den unteren (8) Gelenkzapfen greifende Stellung schwenkbar ist.

5. Drehpflug nach Anspruch 4, dadurch gekennzeichnet, daß das Sperrelement (10) mittels eines doppelt wirkenden Hydraulikzylinders (11) verschwenkbar ist.

6. Drehpflug nach Anspruch 5, dadurch gekennzeichnet, daß der Hydraulikzylinder (11) parallel zu einem doppelt wirkenden Drehzylinder des Drehpfluges angeordnet ist.

7. Drehpflug nach Anspruch 4, dadurch gekennzeichnet, daß das Sperrelement (10) an seinem vorderen Ende mit einer Klaue (12) versehen ist und daß an einem sich quer zu dem vorderen Pflugrahmen (1) erstreckenden, die Lagerung für eine hintere Stabilisatorachse (15) tragenden Träger (13) schwenkbar ein mit der Klaue in Eingriff befindliches Schaltelement (14) gelagert ist, welches mit einem an der Stabilisatorachse (15) befestigten Exzenter (16) in Eingriff ist.

8. Drehpflug nach einem der Ansprüche 4 bis 7, dadurch gekennzeichnet, daß das Sperrelement (10) mit seitlichen Ausnehmungen (39) versehen ist, in welche die Gelenkzapfen (7, 8) einführbar sind.

9. Drehpflug nach einem der Ansprüche 4 bis 7, dadurch gekennzeichnet, daß das Sperrelement (10) mit Langlöchern (18) versehen ist, in welchen jeweils die Gelenkzapfen (7, 8) geführt sind.

10. Drehpflug nach Anspruch 9, dadurch gekennzeichnet, daß der jeweils untere Gelenkzapfen (8) am Ende des Langloches (18) anliegt.

## Claims

1. A semi-mounted or trailed reversible plough having a front (1) and a rear (2) plough frame connected by a horizontal joint (3), wherein the front and rear plough frames each carry a plurality of ploughing members arranged one behind another, having a supporting device comprising at least one wheel (4) and arranged in the rear half of the reversible pough, and having a depth guide arrangement for the rear plough frame (2), characterised in that the joint (3) is formed as a double joint, a lower joint (3a) being arranged below the plane of symmetry of the plough frame (1, 2) and an upper joint (3b) being arranged above the plane of symmetry of the plough frame (1, 2).

2. A reversible plough according to claim 1, characterised in that only the lower joint (3a) is effective in the working position of the reversible plough.

3. A reversible plough according to claim 1 or 2, characterised in that the joint (3) is arranged in a region between the axis of the rear wheel (4) and the last ploughing member of the front plough.

4. A reversible plough according to one of claims 1 to 3, characterised in that the joint (3) comprises a vertical pair of guide plates (6) which are fixed to the front plough frame (1) and between which the front end of the rear plough frame (2) is pivotably held, in that the front end of the rear plough frame (2) has an upper (9b) and a lower (9a) guide part each provided with a pivot pin (7, 8) and each forming part of the upper (3b) and the lower (3a) joint, and in that a locking element (10) is pivotably mounted on the rear end region of the front plough frame (1) and is pivotable into a position engaging either the upper (7) or the lower (8) pivot pin.

5. A reversible plough according to claim 4, characterised in that the locking element (10) is pivotable by means of a double-acting hydraulic cylinder (11).

6. A reversible plough according to claim 5, characterised in that the hydraulic cylinder (11) is arranged parallel to a double-acting rotary cylinder of the reversible plough.

7. A reversible plough according to claim 4, characterised in that the front end of the locking element (10) is provided with a claw (12) and in that a shift member (14), engaging with the claw and with a cam (16) fixed to a rear stabiliser axle (15), is pivotably mounted on a carrier (13) extending transversely to the front plough frame (1) and carrying the mounting for the stabiliser axle (15).

8. A reversible plough according to one of claims 4 to 7, characterised in that the locking element (10) is provided with lateral recesses (39) into which the pivot pins (7, 8) are engageable.

9. A reversible plough according to one of claims 4 to 7, charactersied in that the locking element (10) is provided with slots (18) in which the pivot pins (7, 8) are guided.

10. A reversible plough according to claim 9, characterised in that the lower pivot pin (8) rests against the end of the slot (18).

## Revendications

1. Charrue réversible semi-portée ou remorquée, comportant :
un chassis de charrue avant (1) et un chassis de charrue arrière (2), reliés par une articulation horizontale (3), étant entendu que ce chassis de charrue avant et ce chassis de charrue arrière portent chacun plusieurs corps de charrue disposés les uns derrière les autres,
un dispositif d'appui qui comprend au moins une roue (4) et qui est disposé dans la moitié arrière de la charrue réversible,
et un dispositif de guidage en profondeur pour le chassis de charrue arrière (2),
caractérisé en ce que l'articulation (3) est réalisée sous la forme d'une double articulation, une articulation inférieure (3a) étant disposée sous le plan de symétrie du chassis de charrue (1, 2), et une articulation supérieure (3b) étant disposée au-dessus du plan de symétrie du chassis de charrue (1, 2).

2. Charrue réversible suivant la revendication 1, caractérisée en ce que, dans la position de travail de la charrue réversible, seule est en action l'articulation inférieure (3a).

3. Charrue réversible suivant la revendication 1 ou la revendication 2, caractérisée en ce que l'articulation (3) est disposée dans une zone située entre l'axe de la roue arrière (4) et le dernier corps de charrue de la charrue avant.

4. Charrue réversible suivant l'une des revendications 1 à 3,
caractérisée en ce que l'articulation (3) comprend une paire de plaques de guidage (6) verticales, fixées sur le chassis de charrue avant (1), entre lesquelles est prise, de façon à pouvoir pivoter, l'extrémité avant du chassis de charrue arrière (2),
en ce que l'extrémité avant du chassis de charrue arrière (2) comporte une pièce de guidage supérieure (9b) et une pièce de guidage inférieure (9a), chacune munie d'un tourillon d'articulation (7, 8), ces pièces étant chacune une partie de l'articulation inférieure (3a) et de l'articulation supérieure (3b),
et en ce qu'un organe de blocage (10) est monté sur la zone de l'extrémité arrière du chassis avant (1) de la charrue, cet organe pouvant pivoter dans une position mettant en prise le tourillon d'articulation supérieur (7) et inférieur (8).

5. Charrue réversible suivant la revendication 4, caractérisée en ce que l'organe de blocage (10) peut pivoter sous l'action d'un vérin hydraulique à double effet (11).

6. Charrue réversible suivant la revendication 5, caractérisée en ce que le vérin hydraulique (11) est disposé parallèlement à un vérin rotatif à double effet de la charrue réversible.

7. Charrue réversible suivant la revendication 4, caractérisée en ce que l'organe de blocage (10) est équipé, à son extrémité avant, d'un crabot (12), et en ce que, sur une poutre (13) dirigée transversalement par rapport au chassis de charrue avant (1) et portant les paliers d'un axe arrière (15) de stabilisateur, est monté un organe d'inversion (14) en prise avec le crabot (12) et en prise avec un excentrique (16) fixé sur l'axe (15) du stabilisateur.

8. Charrue réversible suivant l'une des revendications 4 à 7, caractérisée en ce que l'organe de blocage (10) présente des évidements latéraux (36) dans lesquels peuvent s'introduire les tourillons d'articulation (7, 8).

9. Charrue réversible suivant l'une des revendications 4 à 7, caractérisée en ce que l'organe de blocage (10) présente des trous allongés (18), dans chacun desquels est guidé un tourillon d'articulation (7, 8).

10. Charrue réversible suivant la revendication 9, caractérisé en ce que le tourillon d'articulation qui est chaque fois en position basse (8), est en contact avec l'extrémité du trou allongé (18).
